(19)

Europäisches
Patentamt

European
Patent Office

Office européen
des brevets

(11) **EP 2 854 104 A1**

(12) **EUROPEAN PATENT APPLICATION**

(43) Date of publication:
01.04.2015 Bulletin 2015/14

(51) Int Cl.:
*G06T 7/00* $^{(2006.01)}$

(21) Application number: **13189686.2**

(22) Date of filing: **22.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.09.2013 EP 13185988**

(71) Applicant: **Technische Universität München
80333 München (DE)**

(72) Inventors:
• **Engel, Jakob
80335 München (DE)**

• **Sturm, Jürgen
80787 München (DE)**
• **Cremers, Daniel
80939 München (DE)**

(74) Representative: **Lucke, Andreas
Boehmert & Boehmert
Anwaltspartnerschaft mbB
Patentanwälte Rechtsanwälte
Pettenkoferstrasse 20-22
80336 München (DE)**

(54) **Semi-dense simultaneous localization and mapping**

(57)     A method for estimating a pose of an image acquisition means and for determining depth information interleaves the steps of tracking a position and/or orientation of the image acquisition means and mapping by determining depth information. The depth information is determined for only a subset of the image pixels, for instance for those pixels for which the intensity variation is sufficiently high.

Fig. 1

**Description**

Field of the Invention

The invention relates to a method and system for simultaneous localization and mapping of three-dimensional scenes or objects, such as for applications to autonomous navigation of robots or augmented reality.

Background and State of the Art

Reconstructing the three-dimensional world from a handheld camera in real-time is among the most prominent challenges in computer vision, and is conventionally called simultaneous localization and mapping (SLAM).

SLAM techniques can be broadly divided into feature-based SLAM (also known as keypoint-based SLAM) and dense SLAM. In the feature-based methods, tracking and mapping consists of two separate steps: First, discrete feature observations are extracted from the images and matched to each other. Second, the camera and the full feature poses are calculated from a set of such observations. This approach is described in further detail in G. Klein and D. Murray, "Parallel Tracking and Mapping for Small AR Workspaces"; Mixed and Augmented Reality (IS-MAR), 2007, and A. Davison et al., "Mono SLAM: Real-time Single Camera SLAM", Transactions on Pattern Analysis and Machine Intelligence (TPAMI), 29, 2007. While the feature abstraction step greatly reduces the complexity of the overall problem and allows it to be tackled in real time, it inherently comes with two significant drawbacks: Firstly, only image information conforming to the respective feature type and parameterization is utilized, typically image corners and blobs or line segments. Secondly, features have to be matched to one another, which often requires a costly computation of scale-invariant and rotation-invariant descriptors and robust outlier estimation methods, such as RANSAC.

For these reasons, dense approaches to real-time structure and motion have recently become increasingly popular. The fundamental difference to keypoint-based approaches is that these methods directly work on the images instead of a set of extracted features, for both mapping and tracking, as described by R. Newcombe et al., "DTAM: Dense Tracking and Mapping in Real-Time", in ICCV, 2011, and by A. Wendel et al., "Dense Reconstruction On-The-Fly", in ECCV, 2012. The world is modelled as a dense surface, while in turn new frames are tracked using whole-image alignment. This concept eliminates the need for discrete features, and allows exploiting all information present in the image, thereby increasing the tracking accuracy and robustness. However, to date, these methods are not real-time capable on standard CPUs, making them unsuitable for many mobile applications, like robotics or autonomous navigation. Statistical depth map fusion and propagation for image sequences is described in the early work of L. Matthies et al., "Incremental Estimation of Dense Depth Maps from Image Sequences", CVPR, 1998.

What is required is an improved technique for simultaneous localization and mapping that avoids the disadvantages of the prior art and has a high tracking accuracy and robustness while being computationally efficient and fast.

Overview of the Present Invention

These objectives are achieved by means of a method and system for estimating a pose of an image acquisition means and for acquiring depth information according to independent claims 1 and 12, respectively. The dependent claims relate to preferred embodiments.

A method for estimating a pose of an image acquisition means and for determining depth information according to the present invention comprises the steps of determining a position and/or an orientation of an image acquisition means based on previously acquired image data and on depth information determined for said previously acquired image data and based on current image data, and determining depth information for current image data based on previously acquired image data and on depth information determined for said previously acquired image data and based on a position and/or an orientation of said image acquisition means determined for the previously acquired image data.

Said image data comprises a plurality of image pixels, wherein said depth information is determinded only for a subset of said image pixels, wherein said subset is determined based on an intensity variation in a predefined neighborhood of said image pixels.

The invention is based on the realization that by interleaving steps of determining a pose of an image acquisition means and determining depth information, wherein said depth information is determined only for a subset of the image pixels, a highly accurate and robust SLAM technique results that can be implemented in real-time on standard CPUs. The inventive approach is different from the prior art in that it does not rely on features/key points, but instead operates on the raw pixels of the image. However, the determination of said depth information is restricted to those pixels that are in the subset, and hence is not performed for all the pixels. Compared to conventional dense monocular SLAM techniques, the inventors found that a restriction to only a subset of image pixels allows a significant reduction in complexity without sacrificing tracking accuracy and robustness. In this sense, the technique according to the present invention can be described as semi-dense, since it only operates on a subset of image pixels.

A pose of an image acquisition means, in the sense of the present invention, can be understood to relate to a position and/or an orientation of said image acquisition means with respect to an object or scene to be captured.

Depth information, in the sense of the present invention, can be understood to denote any kind of information that indicates or allows deriving a distance between said image acquisition means and an object in the real world that shall be captured by said image acquisition means. In the sense of the present invention, the depth information may be associated with image pixels representing said object or part of said object.

In particular, said depth information may refer to a depth map or an inverse depth map for the image acquired by said image acquisition means.

In a preferred embodiment, said subset comprises pixels for which said neighborhood does not contain keypoints or corners or interest points.

In a preferred embodiment, said subset of image pixels is selected such that an amount of said intensity variation is no smaller than a predefined threshold.

The value of the predefined threshold on the variation of the intensity may be determined depending on the specific application.

Said neighborhood of said image pixel may be chosen depending on the specific application. For instance, said predefined neighborhood of a given image pixel may comprise a plurality of pixels surrounding said given image pixel. For instance, said neighborhood may comprise all pixels adjacent to said given image pixel.

Said neighborhood may be a neighborhood along a predefined direction, such that the image intensity gradient varies along the predefined direction, with an intensity gradient no smaller than a predefined threshold, but does not vary strongly in other directions different from said predefmed direction.

In this configuration, the variation of the intensity gradient does not only relate to the amount of the intensity gradient, but to a variation of an intensity gradient with direction in a predefined neighborhood of said image pixel.

In particular, said subset of image pixels may be selected such that a variation of an image intensity gradient with direction in a predefined neighborhood of said image pixel is no smaller than a predefined threshold.

This is an important distinction over conventional keypoint-based approaches, for which the analysis requires pixels in the vicinity of keypoints or corners that show a strong intensity gradient in various directions.

In a preferred embodiment, said method does not comprise a step of observing and matching discrete features from said image data.

Preferably, said position and/or orientation of said image acquisition means is determined in 3-dimensional space.

In particular, said step of determining a position and/or an orientation of said image acquisition means comprises a step of determining three translational coordinates and/or three rotational coordinates, respectively, pertaining to a given position of said image acquisition means.

It is an important contribution of the invention over the prior art that it allows for continuous tracking and mapping in real time in three dimensions.

In the sense of the present invention, said position and/or said orientation of said image acquisition means may denote a relative position and/or a relative orientation, respectively, of said image acquisition means with respect to a scene and/or an object to be captured.

The method according to the present invention may further comprise a step of changing said relative position and/or said relative orientation of said image acquisition means with respect to said scene and/or said object.

This may be achieved by moving said position and/or said orientation of said image acquisition means relative to a fixed scene or object, and/or by moving an object relative to said image acquisition means.

The invention hence allows updating the estimation of the pose of the image acquisition means and the depth information as the image acquisition means is moved relative to the object or scene to be captured, thereby gradually increasing the accuracy of the estimation and providing a gradually more accurate depth map of the scene or object to be captured.

Said depth information may comprise a depth or an inverse depth, or a distance or inverse distance of said image pixel with respect to a position of said image acquisition means.

In a preferred embodiment, said depth information pertaining to a given image pixel comprises a probability distribution, in particular a probability distribution over the depth or inverse depth of said image pixel.

In an embodiment of the present invention, said steps of determining said position and/or said orientation of said image acquisition means and determining said depth information are iterated, in particular iterated for consecutive image frames of said image data.

The tracking step for determining said position and/or said orientation of said image acquisition means may take as input a recent camera image and the latest available frame which has an associated semi-dense depth map determined in a previous mapping step. Based on this information, the camera position from which the new frame was recorded can be estimated.

The mapping step of determining said depth information, on the other hand, may take as input the most recent tracked camera image, i.e., the output of the previous step of determining a position and/or an orientation of said image acquisition means, as well as the latest available frame with an associated semi-dense depth map, i.e. the output of the previous mapping iteration. Based on this information, the depth map corresponding to the new frame may be computed.

The steps of determining a position and/or an orientation of said image acquisition means and of determining depth information for current image data may alternate, with one step of acquiring depth information following one step of determining a position and/or an orientation, and using the output of that previous step as input, and vice versa.

However, the invention also encompasses embodiments in which an iteration comprises a first integer number n steps of determining said position and/or said orientation of said image acquisition means followed by or preceded by a second integer number m steps of determining said depth information, wherein m may be identical to n, but may also differ from n.

The number of steps n, m may be chosen depending on the computational capacity and/or storage capacity of the computer processors implementing these steps.

Typically, the step of determining said depth information may be computationally more demanding than the step of determining said position and/or said orientation of said image acquisition means, and hence n may be chosen greater than m.

Said step of determining said position and/or said orientation of said image acquisition means may comprise a dense image alignment.

In a preferred embodiment, said step of determining said position and/or said orientation of said image acquisition means comprises a step of minimizing a distance between said current image data and said previously acquired image data, said minimization being conducted for said position and/or said orientation.

In particular, said step of determining said position and/or said orientation of said image acquisition means may comprise a step of minimizing a distance between image intensity values of said current image data and image intensity values of said previously acquired image data, wherein said minimization is conducted for said position and/or said orientation.

Said distance may be a weighted difference.

Said distance may be determined based on image data for all pixels in said subset.

In a preferred embodiment, said position and/or orientation of said image acquisition means is also based on a previously determined position and/or orientation of said image acquisition means.

Preferably, said step of determining said depth information comprises a step of propagating said depth information pertaining to said previously acquired image data to said current image data based on a determined position and/or orientation of said image acquisition means.

Propagation allows projecting the depth map and the associated variances from the previous frame into the new frame using the tracked camera poses.

In a preferred embodiment, said step of propagating comprises a step of calculating an image point based on said depth information pertaining to said previously acquired image data, and projecting said image point into an image pertaining to said current image data.

In a preferred embodiment, said depth information may be determined for said pixels in said subset by means of a one-dimensional search along an epipolar line of said pixels pertaining to said previously acquired image data.

The inventors found that a one-dimensional search, using a one-dimensional descriptor, saves computational resources while still yielding highly reliable results.

Preferably, said step of determining said depth information comprises a step of determining a weighted average of a plurality of depth estimates, each said depth estimate being obtained by means of a one-dimensional search along an epipolar line. This allows fusing observations efficiently.

In a preferred embodiment, the step of determining said depth information comprises an adaptive or variable baseline selection. The baseline refers to the distance between two consecutive camera poses that are compared. A small baseline typically gives a unique, but imprecise minimum in the estimation, whereas a large baseline allows for a very precise estimate, but may have many false minima. By choosing the baseline adaptively, the accuracy of the depth map acquisition may be significantly enhanced.

In a preferred embodiment, said step of determining said depth information hence comprises a step of selecting previously acquired image data as a reference among a plurality of previously acquired image data sets, said previously acquired image data sets pertaining to different positions and/or orientations of said image acquisition means.

The inventive method may comprise a step of selecting a reference for each image pixel in said subset.

In a preferred embodiment, a reference selected for a first pixel in said subset differs from a reference selected for a second pixel in said subset. This allows pixel-wise adaptive baseline selection.

In a preferred embodiment, a reference for a pixel may be selected as the oldest image data set in which said pixel can be identified. As explained above, a long baseline may yield a very precise estimate.

Said depth information for said current image data may be acquired based on a plurality of previously acquired image data sets containing depth information and based on corresponding positions and/or orientations of said image acquisition means determined for said previously acquired image data sets.

By combining estimates based on small and large baselines, the accuracy of the depth information acquisition can be greatly enhanced.

In a preferred embodiment, said step of acquiring said depth information may further comprise a step of estimating a geometric disparity error and/or a photometric disparity error.

The geometric disparity error can be understood to characterize the error on the disparity caused by noise on the position and/or orientation of the image acquisition means or caused by the intrinsic calibration of the image acquisition means.

The photometric disparity error can be understood to characterize the noise on the acquired image data, such as the pixel errors.

By taking into account the geometric disparity error and/or photometric disparity error, the invention allows determining for which pixel a stereo update is worth the computational cost efficiently. Based on this information, the computed observation variants may then be used to integrate the new measurements into the existing depth map.

In a preferred embodiment, said step of determining said depth information comprises a step of regularizing and/or smoothing said depth information.

The regularization may also include a removal of outliers.

Said step of determining said depth information may comprise a step of spatial regularization, wherein said depth information for a given pixel in said subset is modified based on depth information for pixels in a predefmed neighborhood of said given pixel.

As described above, the step of determining said depth information may comprise the substeps of (i) propagating said depth information and/or (ii) refining said depth information by means of new measurements and statistically integrating them into the depth map and/or (iii) regularization/smoothing. These steps may be iterated in any order.

The invention also relates to a system for estimating a pose of an image acquisition means and for determining depth information, comprising data processing means adapted to process image data acquired by means of an image acquisition means. Said data processing means is adapted to determine a position and/or an orientation of said image acquisition means based on previously acquired image data and on depth information determined for said previously acquired image data and based on current image data. Said data processing means is further adapted to determine depth information for current image data based on previously acquired image data and on depth information determined for said previously acquired image data and based on a position and/or orientation of said image acquisition means determined for said previously acquired image data. Said image data comprises a plurality of image pixels, wherein said depth information is determinded only for a subset of said image pixels and wherein said subset is determined based on an intensity variation in a predefined neighborhood of said image pixels.

Said system may further comprise said image acquisition means.

Said image acquisition means may be a monocular camera.

A monocular camera, in the sense of the present invention, may be understood to denote an image acquisition means that does not itself provide and/or acquire distance information to an object in a scene to be captured.

Said data processing means may be adapted to implement a method with some or all of the features as described above.

The invention further relates to a computer program product adapted to implement, when run on a data processing means coupled to an image acquisition means, a method with some or all of the features described above.

Description of Preferred Embodiments

Embodiments of the invention will now be described in further detail with reference to the accompanying Figures, in which:

Fig. 1        is a schematic drawing illustrating a setup for estimating a pose of a camera and acquiring image data and depth information according to an embodiment of the present invention;

Figs. 2a-2d        are images captured with an image acquisition means according to the present invention, comprising a reference image (Fig. 2a) and updated images with small baseline (Fig. 2b), medium baseline (Fig. 2c) and large baseline (Fig. 2d);

Fig. 2e        is a diagram showing the determination of the inverse depth by minimization of a cost function for the small, medium and large baseline examples of Figs. 2b, 2c and 2d, respectively;

Figs. 3a and 3b        illustrate the geometric disparity error for configurations in which the epipolar line is parallel to the image gradient (Fig. 3a), or almost orthogonal to the image gradient (Fig. 3b);

Figs. 4a and 4b        illustrate the photometric disparity error for configurations in which the image gradient along the epipolar line is comparatively large (Fig. 4a), or comparatively small (Fig. 4b);

Figs. 5a and 5b        are a camera image and a semi-dense depth map acquired with the method according to an embodiment of the present invention; and

Figs. 6a and 6b    show a corresponding key point depth map and dense depth map for the scene shown in Fig. 5a, for comparison.

In an embodiment, the invention relates to a statistical approach to perform real-time semi-dense monocular SLAM with high accuracy and limited computational resources that allow the computations to be run on a single state-of-the-art CPU. An important aspect of the embodiment is a continuous estimation of a semi-dense inverse depth map associated with each camera frame, and in turn usage of this depth map data to track the motion of the camera. Specifically, one may estimate for all pixels which have a non-negligible image gradient a Gaussian-distributed hypothesis for the inverse depth at that location. This inverse depth information may be propagated over time and updated with stereo observations from images which provide the optimal baseline for the given pixel. This allows estimating the depth for both far-away and close-by regions accurately.

In contrast to existing SLAM or visual odometry methods, the techniques described in the embodiment are not based on features/key points, but instead operate on the raw pixels of the images. By using a statistical representation of the estimated semi-dense depth map, and by fully interleaving spatial regularization with stereo depth-estimation, frame-to-frame propagation and tracking, real-time processing on a single CPU becomes feasible.

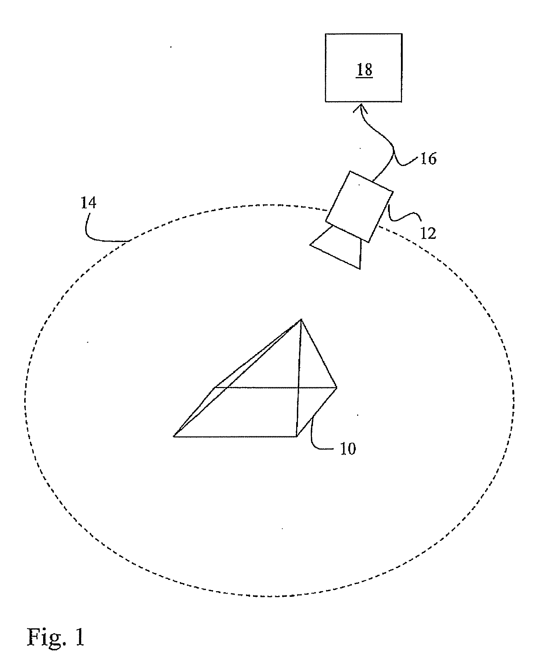

Fig. 1 schematically illustrates an exemplary setup in which the present invention may be implemented to capture an image and determine depth information of an object located in a three-dimensional space, in this case a toy pyramid 10. An image of the pyramid 10 is captured by moving a monocular camera 12 relatively to the pyramid 10 along a trajectory 14. The image information provided by the monocular camera 12 is provided via a data connection 16 to a data processing unit 18. The data connection 16 may be a wired or wireless connection. The data processing unit 18 may be a desktop or a laptop computer on which a method for estimating a pose of the camera 12 and for determining a depth map of the object 10 according to the present invention is implemented.

The data processing unit 18 is adapted to implement the algorithm for tracking the 3D motion of the monocular camera 12 with respect to the object 10 in real-time, while simultaneously estimating a semi-dense depth image of the current scene. In an embodiment of the invention, this task can be split in two separate parts that can be performed simultaneously:

(i) Tracking: Takes as input the most recent camera image, as well as the latest available frame which has an associated semi-dense depth map, i.e., the output of the mapping step. Using dense image alignment, the camera position from which the new frame was recorded can be estimated. On a modem CPU, the inventors found the tracking to run at approximately 30 to 60 Hz in a single thread, depending on the type of movement/scene.

(ii) Mapping: Takes as input the most recent tracked camera image (i.e., the output of the tacking step), as well as the latest available frame with depth map (i.e., the output of the last mapping iteration). Based on this information, the depth map corresponding to the new frame is computed. The inventors found this step can be run at approximately 10 to 20 Hz on a modem CPU in a single thread. Since the mapping step uses more computational resources than the tracking step, mapping and tracking can be interleaved such that the mapping step, i.e. estimation and update of the depth map, is only performed for every third frame. Each mapping iteration may in turn consist of three steps:

- Propagation: Using the known camera poses, the depth map and the associated variances are projected into the new frame.
- Observation: The depth map may be refined/extended using a large number of variable-baseline stereo comparisons, which are integrated statistically into the depth map.
- Regularization: One iteration of spatial smoothing, including outlier removal may be performed.

The steps of propagation, observation and regularization may be performed in any order.

This approach is motivated by the principle that for most real-time applications, video information is abundant and cheap to come by. The inventors found that the computational budget should hence be spent such that the expected information gain is maximized. Instead of reducing the images to a sparse set of feature observations, the method according to the present invention may continuously estimate a semi-dense inverse depth map for the current frame, which is dense in all image regions whose intensity gradient is larger than a predefined threshold.

Hence, in a first step a subset of image pixels may be determined for which an intensity variation in a predefined neighborhood is no smaller than a predefined threshold value. The neighborhood of a given image pixel may comprise a predetermined number of pixels adjacent to a given pixel.

The threshold may be a fixed threshold value, or may be an adaptive threshold, determined according to the variation of image gradients across the acquired image data.

The interleaved steps of tracking and mapping, as described in more detail further below, are then performed only for the image pixels in said subset.

The method according to the present invention may comprise one inverse depth hypothesis per pixel modeled by a Gaussian probability distribution. This representation still allows using whole-image alignment to track new frames, while at the same time greatly reducing computational complexity. As will be described in further detail below, the estimated depth map is propagated from frame to frame, and updated with variable-baseline stereo comparisons. Prior knowledge about a pixel depth may be used to select a suitable reference frame on a per-pixel basis, and to select a suitable disparity search range. This allows estimating the depth both of close-by and far-away image regions accurately. In contrast to state of the art techniques, the method according to the present invention may keep at most one inverse depth hypothesis per pixel that can be represented as a Gaussian probability distribution.

1. Stereo-Based Depth Map Update

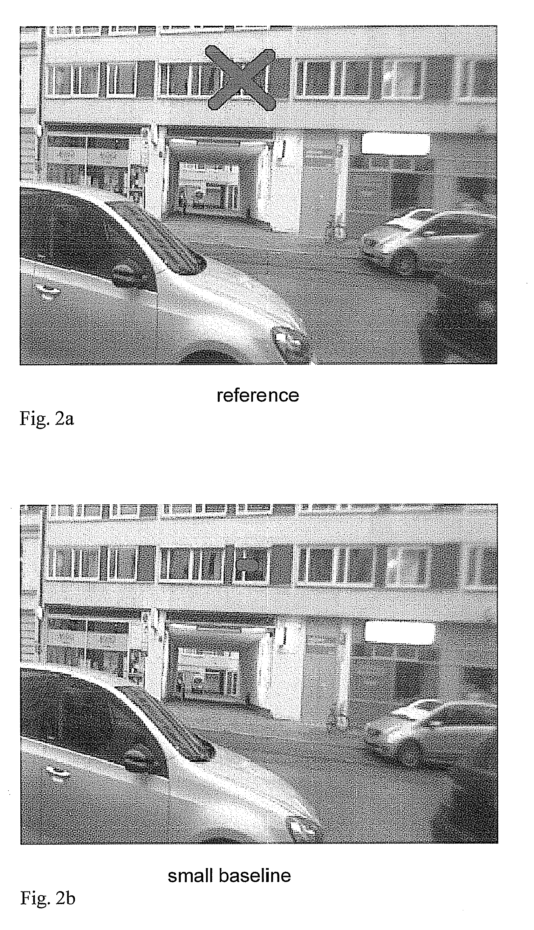

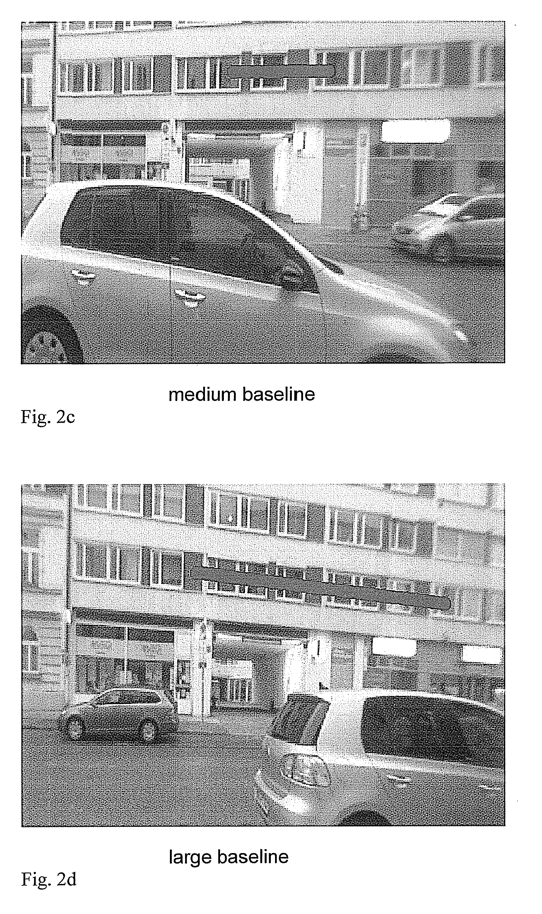

For stereo, there is a well-known trade-off between position and accuracy. Fig. 2a is an exemplary image of a reference scene captured by the monocular camera 12, and Figs. 2b to 2d show an image of the same scene, but with varying baseline compared to the reference scene in Fig. 2a. Fig. 2b corresponds to a small baseline, i.e., the camera pose has only changed marginally. Fig. 2c corresponds to a medium baseline scenario, while Fig. 2d corresponds to a large baseline scenario.

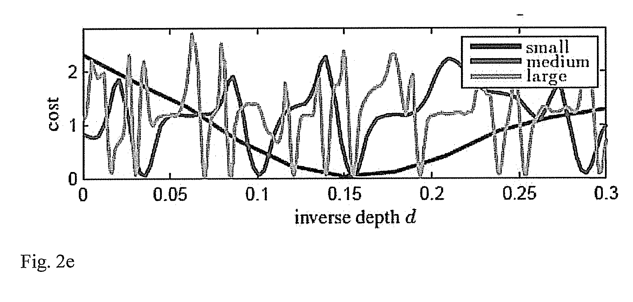

Fig. 2e is a diagram that shows the determination of the inverse depth d of a given pixel by means of a minimization of a suitably chosen cost function, as will be detailed below. The curve with the single minimum corresponds to the small baseline, and yields a unique, but rather imprecise inverse depth value d. The medium baseline scenario corresponds to a plurality of local minima, while for the large baseline scenario the number of minima increases even further. Hence, large baseline configurations allow for a very precise estimate, but on the other hand may yield false minima.

In the prior art, multiple-baseline stereo approaches try to resolve this trade-off between position and accuracy by accumulating the respective cost functions over many frames. In contrast, the present invention may encompass a statistical approach which explicitly takes advantage of the effect that in the video, small-baseline frames are available before large-baseline frames.

The full depth map update may be performed once for each new frame and may consist of the following steps: First, a subset of pixels is selected for which the accuracy of the disparity search is sufficiently large. To achieve this, one may use three intuitive and efficiently computable criteria, as will be described in Section 1.3. For each selected pixel, one may then individually select a suitable reference frame, and perform a one-dimensional disparity search. Propagated prior knowledge is used to reduce the disparity search range when possible, further decreasing the computational cost and eliminating false minima. The obtained inverse depth estimate may then be statistically fused into the existing depth map.

1.1 Reference Frame Selection

Ideally, the reference frame is chosen such that it maximizes the stereo accuracy, while keeping the disparity search range as well as the observation angle small. The selection may be made for each pixel independently. The inventors have achieved good results with an adaptive baseline selection in which, for each pixel in the new frame, a different stereo-reference frame is selected based on (1) how long the pixel was visible, and (2) its current depth estimate. As an example, as a reference one may start with the oldest frame the pixel was observed in and where the disparity search range and the observation angle do not exceed a predefined threshold. If the disparity search is unsuccessful, i.e., no good match is found, the pixel age may be decreased, such that subsequent disparity searches use newer frames where the pixel is likely to be still visible.

1.2 Stereo Matching

An exhaustive search may be performed for the pixel intensity along the epipolar line in the selected reference frame. If a prior inverse depth hypothesis is available, the search interval may be limited by $d +/- 2 \cdot \sigma$, where $d$ and $\sigma$ denote the mean and standard deviation of the prior hypothesis. Otherwise, the full disparity range may be searched.

In an exemplary implementation, one may use the SSD error over five equidistant points on the epipolar line. This has been found to significantly increase the robustness in high-frequent image regions, but does not change the purely one-dimensional nature of this search. The search is also computationally efficient, as four out of five interpolated image values can be re-used for each SSD evaluation.

1.3 Uncertainty Estimation

Uncertainty propagation may be used to derive an expression for the error variance $\sigma_d{}^2$ on the inverse depth d. This can be achieved by expressing the optimal inverse depth d* as a function of the noisy inputs. One may consider the subsequent images $I_0$, $I_1$, the relative orientation $\xi$ corresponding to the pose estimate of the camera 12, and the camera calibration in terms of a projection function $\pi$,

$$d^* = d(I_0, I_1, \xi, \pi). \qquad (1)$$

In an ideal linear case, the projection function is simply a projection matrix. In practice, however, it may be desirable to take non-linear distortion effects into account for the projection function $\pi$. The projection function $\pi$ will in general depend on the characteristics and parameters of the monocular camera 12.

The error-variance of d* can be expressed as

$$\sigma_d^2 = J_d \Sigma J_d^T, \qquad (2)$$

where $J_d$ is the Jacobian of d, and $\Sigma$ denotes the covariance of the input-error. Covariance propagation has been described in further detail by A. Clifford, "Multivariate Error Analysis", John Wiley & Sons, 1973.

For simplicity, the following analysis is performed for patch-free stereo, i.e., a point-wise search for a single intensity value along the epipolar line. The inventors found that this computation may be split into two steps: First, the epipolar line in the reference frame, and the best matching position $\lambda^*$ along it (i.e., the disparity) may be computed. This may involve two independent error sources, the geometric error originating from noise on the pose estimate $\xi$ and the projection $\pi$, and the photometric error originating from noise and ambiguities in the images $I_0$, $I_1$. Second, the inverse depth d* can be computed from the disparity $\lambda^*$.

The geometric disparity error characterizes the error $\varepsilon_\lambda$ on the disparity $\lambda^*$ caused by noise on the camera pose $\xi$ and the projection $\pi$. While it would be possible to model, propagate and estimate the complete covariance on $\xi$ and $\pi$, the inventors found that the gain in accuracy often does not justify the increase in the computational complexity. The inventors have obtained good results with an intuitive approximation: Let the considered epipolar line segment $L \subset \mathbb{R}^2$ be defined by

$$L := \left\{ l_0 + \lambda \begin{pmatrix} l_x \\ l_y \end{pmatrix} \mid \lambda \in S \right\}, \qquad (3)$$

where $\lambda$ is the disparity of search interval S, $(l_x, l_y)$ denotes the normalized epipolar line direction, and $l_0$ denotes a point corresponding to infinite depth. One may now assume that only the absolute position of this line segment, i.e., $l_0$ is subject to isotropic Gaussian noise $\varepsilon_1$. In practice, one may keep the searched epipolar line segments short, and hence the influence of rotation errors is small, making this a good approximation.

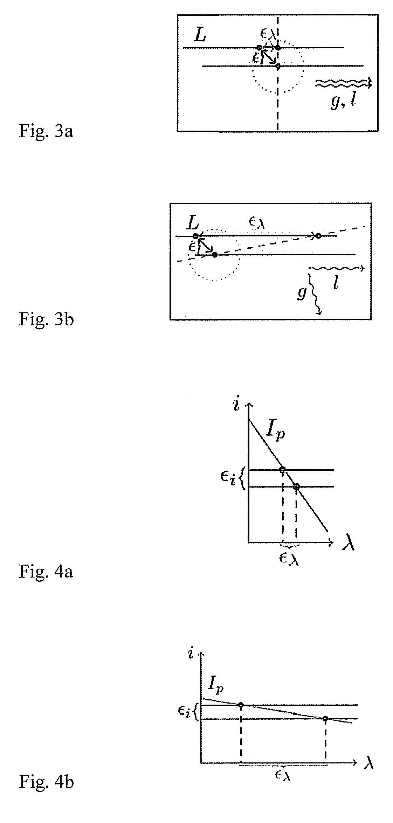

Intuitively, a positioning error $\varepsilon_1$ on the epipolar line causes a small disparity error $\varepsilon_\lambda$ if the epipolar line is parallel to the image gradient, and a large error otherwise. This is illustrated schematically in Figs. 3a and 3b, in which the image gradient g and the direction of the epipolar line 1 are indicated by curly errors, and the dashed line represents the isocurve on which the matching curve has to lie. Fig. 3a shows a configuration in which the epipolar line is parallel to the image gradient, and hence the disparity error $\varepsilon_\lambda$ resulting from a small positioning error $\varepsilon_1$ of the epipolar line is small. Fig. 3b illustrates a configuration in which the epipolar line is almost orthogonal to the image gradient g. In this configuration, the small positioning error $\varepsilon_1$ of the epipolar line will result in a much larger disparity error $\varepsilon_\lambda$.

The image constraints the optimal disparity $\lambda^*$ to lie on a certain isocurve, i.e., a curve of equal intensity. One may approximate this isocurve to be locally linear, i.e., the gradient direction to be locally constant. This gives

$$l_0 + \lambda^* \begin{pmatrix} l_x \\ l_y \end{pmatrix} \stackrel{!}{=} g_0 + \gamma \begin{pmatrix} -g_y \\ g_x \end{pmatrix}, \quad \gamma \in \mathbb{R} \qquad (4)$$

where g = ($g_x$, $g_y$) is the image gradient and go denotes the point on the isocurve. The influence of noise on the image values will be described further below. At this point, one may assume g and go noise-free. Solving for $\lambda$ gives the optimal disparity $\lambda^*$ in terms of the noisy input $l_0$:

$$\lambda^*(l_0) = \frac{\langle g, g_0 - l_0 \rangle}{\langle g, l \rangle} \tag{5}$$

Analogously to Equation (2), the variance of the geometric disparity error can be expressed as

$$\sigma^2_{\lambda(\xi,\pi)} = J_{\lambda^*(l_0)} \begin{pmatrix} \sigma_l^2 & 0 \\ 0 & \sigma_l^2 \end{pmatrix} J^T_{\lambda^*(l_0)} = \frac{\sigma_l^2}{\langle g, l \rangle^2}, \tag{6}$$

where g is the normalized image gradient, 1a normalized epipolar line direction, and $\sigma_1^2$ is the variance of $\varepsilon_1$. This error term solely originates from noise on the relative camera orientation $\xi$ and the camera calibration $\pi$, i.e., it is independent of image intensity noise.

The photometric disparity error encodes that small image intensity errors have a large effect on the estimated disparity if the image gradient is small, and a small effect otherwise. The effect is illustrated in Figs. 4a and 4b, which show the relation between the noise $e_i$ on the image intensity i and the disparity error $\varepsilon_\lambda$. Fig. 4a corresponds to a configuration in which the image gradient along the epipolar line is large. If, on the other hand, the gradient is small, as in the configuration of Fig. 4b, the disparity error is comparatively much larger.

Mathematically, this relation can be derived as follows. We seek the disparity $\lambda^*$ that minimizes the difference in intensities, i.e.,

$$\lambda^* = \min_\lambda \left( i_{ref} - I_p(\lambda) \right)^2, \tag{7}$$

where $i_{ref}$ denotes the reference intensity and $I_p(\lambda)$ denotes the image intensity on the epipolar line at disparity $\lambda$. One may assume a good initialization $\lambda_0$ to be available from the exhaustive search. Using a first-order Taylor approximation for $I_p$ gives

$$\lambda^*(I) = \lambda_0 + \left( i_{ref} - I_p(\lambda_0) \right) g_p^{-1} \tag{8}$$

where $g_p$ is the gradient of $I_p$, i.e., the image gradient along the epipolar line. For clarity, here we only consider noise on $i_{ref}$ and $I_p(\lambda_0)$; equivalent results may be obtained in the general case when taking into account noise on the image values involved in the computation of gp. The variance of the photometric disparity error is then given by

$$\sigma^2_{\lambda(l)} = J_{\lambda^*(l)} \begin{pmatrix} \sigma_i^2 & 0 \\ 0 & \sigma_i^2 \end{pmatrix} J_{\lambda^*(l)} = \frac{2\sigma_i^2}{g_p^2}, \tag{9}$$

where $\sigma_i^2$ is the variance of the image intensity noise. The respective error originates solely from noisy image intensity values, and hence is independent of the geometry disparity error.

Using that, for small camera rotation, the inverse depth d is approximately proportional to the disparity $\lambda$, the observation variance of the inverse depth $\sigma^2_{d,obs}$ can be calculated using

$$\sigma^2_{d,obs} = \alpha^2\left(\sigma^2_{\lambda(\xi,\pi)} + \sigma^2_{\lambda(I)}\right), \tag{10}$$

where the proportionality constant $\alpha$, in the general non-rectified case, is different for each pixel, and can be calculated from

$$\alpha := \frac{\delta_d}{\delta_\lambda}, \tag{11}$$

where $\delta_d$ denotes the length of the searched inverse depth interval, and $\delta_\lambda$ is the length of the searched epipolar line segment. While $\alpha$ is inversely linear in the length of the camera translation, it also depends on the translation direction and the pixel location in the image.

When using an SSD error over multiple points along the epipolar line, a good upper bound for the matching uncertainty can be given by

$$\sigma^2_{d,obs-SSD} \le \alpha^2\left(min\{\sigma^2_{\lambda(\xi,\pi)}\} + min\{\sigma^2_{\lambda(I)}\}\right), \tag{12}$$

where the minimum goes over all points included in the SSD.

1.4 Depth Observation Fusion

Having obtained a depth observation for a pixel on the current image, it may be integrated into the depth map as follows: If no prior hypothesis for a pixel exists, one may initialize it directly with the observation. Otherwise, the new observation is incorporated into the prior, which corresponds to an update step in a one-dimensional Kalman filter: Given a prior distribution N ($d_p$, $\sigma_p^2$) and a noisy observation N (do, $\sigma_0^2$), the posterior can be calculated using Bayes' formula, and is given by

$$\mathcal{N}\left(\frac{\sigma^2_p d_o + \sigma^2_o d_p}{\sigma^2_p + \sigma^2_o}, \frac{\sigma^2_p \sigma^2_o}{\sigma^2_p + \sigma^2_o}\right). \tag{13}$$

In summary, new stereo observations can be obtained on a per-pixel basis, adaptively selecting for each pixel a suitable reference frame and performing a one-dimensional search along the epipolar line. Three major factors that determine the accuracy of such a stereo observation are:

(i) the geometric disparity error, depending on the magnitude of the image gradient projected onto the epipolar line;
(ii) the photometric error, depending on the angle between the image gradient and the epipolar line, independent of the gradient magnitude; and
(iii) the pixel to inverse depth ratio $\alpha$, depending on the camera translation, the focal length, and the pixel position.

These are local criteria that are relatively easy to compute, and may be used to determine for which pixel a stereo update is worth the computational costs. The computed observation variance may then be used to integrate the new measurements into the existing depth map.

2. Depth Map Propagation

The estimated inverse depth map may be continuously propagated from frame to frame once a camera position of the next frame has been estimated. Based on the inverse depth estimate $d_0$ for a pixel, the corresponding 3D point is calculated and projected into the new frame, providing an inverse depth estimate $d_1$ in the new frame. To eliminate discretization errors, the subpixel accurate image location of the projected point is kept, and re-used for the next propagation step.

For propagating the inverse depth variance, one may assume the camera rotation to be small. The new inverse depth $d_1$ can then be approximated by

$$d_1(d_0) = (d_0^{-1} - t_z)^{-1},\qquad(14)$$

where $t_z$ is the camera translation along the optical axis. The variance of $d_1$ is hence given by

$$\sigma_{d_1}^2 = J_{d_1}\sigma_{d_0}^2 J_{d_1}^T + \sigma_p^2 = \left(\frac{d_1}{d_0}\right)^4 \sigma_{d_0}^2 + \sigma_p^2,\qquad(15)$$

where $\sigma_p^2$ is the prediction uncertainty, which directly corresponds to the prediction step in an extended Kalman filter.

It can also be interpreted as keeping the variance on the z-coordinate of a point fixed, i.e., setting $\sigma_{Z0} = \sigma_{Z1}$.

The preferred embodiment also involves a collision handling. At all times, one may allow at most one inverse depth hypothesis per pixel. If two inverse depth hypotheses d and d' are propagated to the same pixel in the new frame, one may distinguish two cases: If d and d' are statistically similar, i.e., lie within $2\sigma$ bounds, they may be treated as two independent observations of the pixel depth and may be fused according to Equation (13). Otherwise, the point that is further away from the camera is assumed to be occluded, and is removed.

3. Depth Map Regularization

Spacial depth map regularization may be performed in an interleaved fashion, both for inverse depth and the respective variances. This may be achieved by using $L_2^2$ norm over the gradient, coupled with a statistically weighted data term and a cut-off function to preserve sharp edges.

To handle outliers, one may continuously keep track of the validity of each inverse depth hypothesis in terms of the probability that it is an outlier, or has become invalid, such as due to occlusion or a moving object. For each successful stereo observation, this probability is decreased. It is increased for each unsuccessful stereo search, if the respective intensity changes significantly on propagation, or when the absolute image gradient falls below a given threshold.

If, during regularization, the probability that all contributing neighbors are outliers, i.e., the product of the individual outlier-probabilities, rises above a given threshold, the hypothesis is removed. Equally, if for an empty pixel this product drops below a given threshold, a new hypothesis may be created from the neighbors. This allows filling holes arising from the for-ward-warping nature of the propagation step, and dilates the semi-dense depth map to a small neighborhood around sharp image intensity edges, which significantly increases tracking and mapping robustness.

4. Dense Tracking

Based on the inverse depth map of the previous frame, one may estimate the camera pose of the current frame using dense image alignment. Methods of this type have previously been applied successfully for tracking RGB-D cameras, which directly provide dense depth measurements along with the color image, as described by C. Kerl et. al., "Robust Odometry Estimation for RGB-D Cameras", ICRA 2013. In an embodiment, dense tracking may be based on the direct minimization of the photometric error,

$$r_i(\xi) := \left(I_2\left(w\left(x_i, d_i, \xi\right)\right) - I_1(x_i)\right)^2,\qquad(16)$$

where i denotes the pixel and where the warp function $w:\Omega_1 x R x R^6 \rightarrow \Omega_2$ maps each point $x_i \in \Omega_1$ in the reference image $I_1$ to the respective point $(x_i, d_{i,\xi}) \in \Omega_2$ in the new image $I_2$. As input it requires the 3D pose of the camera $\xi \in R^6$ and uses the estimated inverse depth $d_i \in R$ for the pixel in $I_1$. However, no depth information with respect to $I_2$ is required.

A weighting scheme may be applied to increase robustness to self-occlusion and moving objects. Further, one may add the variance of the inverse depth $\sigma_{d_i}^2$ as an additional weighting term, making the tracking resistant to recently initialized and still inaccurate depth estimates from the mapping process.

The final target functional that is minimized may hence be given by

$$E(\xi) := \sum_i \frac{\alpha(r_i(\xi))}{\sigma_{d_i}^2} r_i(\xi) \ , \tag{17}$$

where the sum is over all pixels and $\alpha : R \rightarrow R$ defines the weight for given residual. Minimizing this error can be interpreted as computing the maximum likelihood estimator for $\xi$, assuming independent Gaussian noise on the image intensity values. An exemplary weighting scheme can be found in C. Kerl et al., "Robust Odometry Estimation for RGB-D Cameras"; ICRA, 2013.

The resulting weighted least-squares problem is solved efficiently using an iteratively re-weighted Gauss-Newton algorithm coupled with a coarse-to-fine approach using four pyramid levels.

The method according to the present invention can also be extended to work with a stereo-camera. This may be achieved by adding fixed-base line stereo searches into the depth map estimation process.

5. Exemplary Implementations and Results

In an embodiment of the invention, tracking of the camera pose and depth estimation may be split into two separate threads: One thread continuously propagates the inverse depth map to the most recent tracked frame, updates it with stereo comparisons and performs one regularization iteration. The other thread simultaneously tracks each incoming frame on the most recent available depth map. While tracking is performed in real-time at 30 Hz on a standard laptop, one complete mapping iteration takes longer and can be performed at roughly 10 Hz. If the map is heavily populated, one may adaptively reduce the number of stereo comparisons to maintain a constant frame-rate.

A standard key point-based method may be used for initialization to obtain the relative camera pose between two initial frames, which are then used to initialize the inverse depth map needed for tracking successive frames.

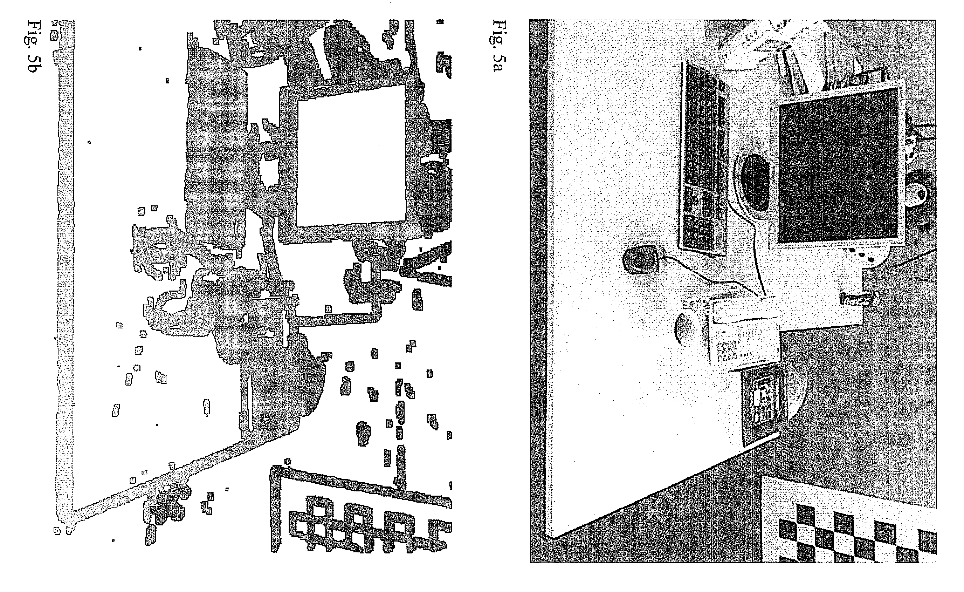

Fig. 5b is a depth map obtained with the method according to the present invention as described above. Fig. 5a shows the corresponding original camera image. In the depth map of Fig. 5b, darker colors correspond to points that are further away from the camera. As can be taken from a comparison of Fig. 5b with Fig. 5a, the algorithm according to the present invention is semi-dense in that the depth information is acquired only for a subset of image pixels in which the intensity varies in a predefined neighborhood around a given pixel. Parts of the image without significant intensity variations, such as the surface of the computer screen or parts of the surface of the desk, are not taken into account for the mapping. As can be taken from Fig. 5b, the method according to the present invention allows reconstructing and tracking indoor scenes even with little structure accurately.

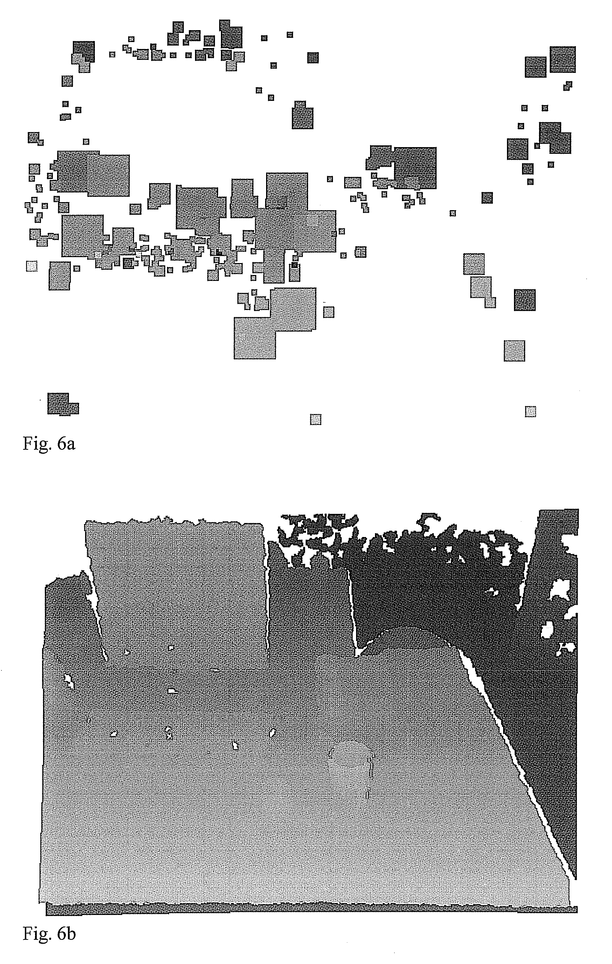

For comparison, Fig. 6a and 6b show corresponding results for the same scene obtained with a key point approach and fully dense depth map, respectively. The key point approach used to obtain the results shown in Fig. 6a is based on G. Klein and D. Murray, "Parallel Tracking and Mapping for Small AR Workspaces"; Mixed and Augmented Reality (IS-MAR) 2007. From a comparison of Fig. 5b with Fig. 6a, the approach according to the present invention provides significantly more depth information about the scene and environment.

The full dense map shown in Fig. 6b has been obtained using the techniques described by R. Newcombe et al., "DTAM: Dense Tracking and Mapping in Real-Time"; ICCV, 2011. By comparison with Fig. 5b, the full dense depth map contains additional information about the environment, but this comes at the expense of much higher computational complexity, and typically requires a powerful graphics processer unit. In contrast, the method according to the present invention can be implemented on a standard CPU, or even in small processors such as embedded systems or smartphones for mobile applications.

Further applications lie in the field of robotics, where cameras have recently become popular as a main sensor for pose-estimation and navigation of resource-constrained platforms, such as quadrocopters. In the foreseeable future, such systems will be miniaturized even further, prohibiting the use of stereo or depth sensing cameras. The semi-dense depth maps provided by the method of the present invention provide valuable additional information about obstacles in the environment that allow the robotors navigating autonomously, or with minimal pilot workload. Such information will not be available when using key point-based solutions.

Reliable camera-tracking is also required to artificially place additional objects in the video in augmented reality applications, so that the objects appear to be part of the real scene. The method according to the present invention allows to annotate objects in a video in real time.

The description of the preferred embodiments and the figures merely served to illustrate the invention and the beneficial effects achieved therewith, but should not be understood to imply a limitation. The scope of the invention is to be determined solely by means of the appended claims.

Reference Signs

10 - object to be captured

12 - monocular camera

14 - trajectory for monocular camera 12

16 - data connection

18 - data processing unit

**Claims**

1. A method for estimating a pose of an image acquisition means and for determining depth information, said method comprising:

    determining a position and/or an orientation of an image acquisition means (12) based on previously acquired image data and on depth information determined for said previously acquired image data and based on current image data; and
    determining depth information for current image data based on previously acquired image data and on depth information determined for said previously acquired image data and based on a position and/or orientation of said image acquisition means (12) determined for said previously acquired image data;
    wherein said image data comprises a plurality of image pixels, and wherein said depth information is determined only for a subset of said image pixels
    wherein said subset is determined based on an intensity variation in a predefined neighborhood of said image pixels;

2. The method according to claim 1, wherein said subset comprises pixels for which said neighborhood does not contain keypoints or corners or interest points.

3. The method according to claim 1 or 2, wherein said depth information pertaining to a given image pixel comprises a probability distribution, in particular a probability distribution over the depth or inverse depth of said image pixel.

4. The method according to any of the preceding claims, wherein said steps of determining said position and/or said orientation of said image acquisition means (12) and determining said depth information are iterated, in particular iterated for consecutive image frames of said image data.

5. The method according to any of the preceding claims, wherein said step of determining said position and/or said orientation of said image acquisition means (12) comprises a step of minimizing a distance between said current image data and said previously acquired image data, in particular minimizing a distance between image intensity values of said current image data and image intensity values of said previously acquired image data, wherein said minimization is conducted for said position and/or said orientation.

6. The method according to any of the preceding claims, wherein said step of determining said depth information comprises a step of propagating said depth information pertaining to said previously acquired image data to said current image data based on a determined position and/or orientation of said image acquisition means (12).

7. The method according to any of the preceding claims, wherein said depth information is determined for said pixels in said subset by means of a one-dimensional search along an epipolar line of said pixel pertaining to said previously acquired image data.

8. The method according to claim 7, wherein said step of determining said depth information comprises a step of determining a weighted average of a plurality of depth estimates, each said depth estimate being obtained by means of a one-dimensional search along an epipolar line.

9. The method according to any of the preceding claims, wherein said step of determining said depth information comprises a step of selecting previously acquired image data as a reference among a plurality of previously acquired image data sets, said previously acquired image data sets pertaining to different positions and/or orientations of said image acquisition means (12).

10. The method according to claim 9, wherein a reference selected for a first pixel in said subset differs from a reference selected for a second pixel in said subset.

11. The method according to any of the preceding claims, wherein said step of determining said depth information comprises a step of estimating a geometric disparity error and/or a photometric disparity error.

12. A system for estimating a pose of an image acquisition means (12) and for determining depth information, comprising:

   data processing means (18) adapted to process image data acquired by means of an image acquisition means (12);
   said data processing means (18) adapted to determine a position and/or an orientation of an image acquisition means (12) based on previously acquired image data and on depth information determined for said previously acquired image data and based on current image data; and
   said data processing means (18) further adapted to determine depth information for current image data based on previously acquired image data and on depth information determined for said previously acquired image data and based on a position and/or orientation of said image acquisition means (12) determined for said previously acquired image data;
   wherein said image data comprises a plurality of image pixels, and wherein said depth information is determined only for a subset of said image pixels;
   wherein said subset is determined based on an intensity variation in a predefined neighborhood of said image pixels.

13. The system according to claim 12, wherein said image acquisition means is a monocular camera (12).

14. The system according to claim 12 or 13, wherein said data processing means is adapted to implement a method according to any of the claims 1 to 11.

15. A computer program product adapted to implement, when run on a data processing means (18) coupled to an image acquisition means (12), a method according to any of the claims 1 to 11.

Fig. 1

reference

Fig. 2a

small baseline

Fig. 2b

medium baseline

Fig. 2c

large baseline

Fig. 2d

Fig. 2e

Fig. 3a

Fig. 3b

Fig. 4a

Fig. 4b

Fig. 5a

Fig. 5b

Fig. 6a

Fig. 6b

Europäisches
Patentamt

European
Patent Office

Office européen
des brevets

# EUROPEAN SEARCH REPORT

Application Number

EP 13 18 9686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATTHIES L ET AL: "Incremental estimation of dense depth maps from image sequences", PROCEEDINGS OF THE CONFERENCE ON COMPUTER VISION AND PATTERN RECOGNITION. ANN ARBOR, JUNE 5 - 9, 1988; [PROCEEDINGS OF THE CONFERENCE ON COMPUTER VISION AND PATTERN RECOGNITION], WASHINGTON, IEEE COMP. SOC. PRESS, US, vol. -, 5 June 1988 (1988-06-05), pages 366-374, XP010012873, DOI: 10.1109/CVPR.1988.196261 ISBN: 978-0-8186-0862-9 * abstract, sections 1-6, Figs. 1-5 * ----- | 1-15 | INV. G06T7/00 |
| X | WENDEL A ET AL: "Dense reconstruction on-the-fly", COMPUTER VISION AND PATTERN RECOGNITION (CVPR), 2012 IEEE CONFERENCE ON, IEEE, 16 June 2012 (2012-06-16), pages 1450-1457, XP032232232, DOI: 10.1109/CVPR.2012.6247833 ISBN: 978-1-4673-1226-4 * abstract, sections 1-5, figures 1-7 * ----- | 1-15 | |
| X | EP 1 248 235 A2 (ST MICROELECTRONICS INC [US]) 9 October 2002 (2002-10-09) * pages 1-8 * ----- -/-- | 1-15 | TECHNICAL FIELDS SEARCHED (IPC) G06T G06K |

The present search report has been drawn up for all claims

| Place of search | Date of completion of the search | Examiner |
|---|---|---|
| Munich | 1 December 2014 | Borotschnig, Hermann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 18 9686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KERL CHRISTIAN ET AL: "Robust odometry estimation for RGB-D cameras", 2013 IEEE INTERNATIONAL CONFERENCE ON ROBOTICS AND AUTOMATION (ICRA); 6-10 MAY 2013; KARLSRUHE, GERMANY, IEEE, US, 6 May 2013 (2013-05-06), pages 3748-3754, XP032506020, ISSN: 1050-4729, DOI: 10.1109/ICRA.2013.6631104 ISBN: 978-1-4673-5641-1 [retrieved on 2013-10-13] * the whole document * | 1-15 | |
| T | ENGEL JAKOB ET AL: "Semi-dense Visual Odometry for a Monocular Camera", 2013 IEEE INTERNATIONAL CONFERENCE ON COMPUTER VISION, IEEE, 1 December 2013 (2013-12-01), pages 1449-1456, XP032572973, ISSN: 1550-5499, DOI: 10.1109/ICCV.2013.183 [retrieved on 2014-02-28] * the whole document * | | |
| T | THOMAS SCHOPS ET AL: "Semi-dense visual odometry for AR on a smartphone", 2014 IEEE INTERNATIONAL SYMPOSIUM ON MIXED AND AUGMENTED REALITY (ISMAR), 1 September 2014 (2014-09-01), pages 145-150, XP055155506, DOI: 10.1109/ISMAR.2014.6948420 ISBN: 978-1-47-996184-9 * the whole document * | | TECHNICAL FIELDS SEARCHED (IPC) |

The present search report has been drawn up for all claims

| Place of search | Date of completion of the search | Examiner |
|---|---|---|
| Munich | 1 December 2014 | Borotschnig, Hermann |

## ANNEX TO THE EUROPEAN SEARCH REPORT
## ON EUROPEAN PATENT APPLICATION NO.

EP 13 18 9686

This annex lists the patent family members relating to the patent documents cited in  the above-mentioned European search report.
The members are as contained in the European Patent Office EDP file on
The European Patent Office is in no way liable for these particulars which are merely given for the purpose of information.

01-12-2014

| Patent document cited in search report | | Publication date | Patent family member(s) | | Publication date |
|---|---|---|---|---|---|
| EP 1248235 | A2 | 09-10-2002 | EP | 1248235 A2 | 09-10-2002 |
| | | | JP | 2003006619 A | 10-01-2003 |
| | | | US | 2002172413 A1 | 21-11-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. KLEIN ; D. MURRAY.** Parallel Tracking and Mapping for Small AR Workspaces. *Mixed and Augmented Reality (IS-MAR,* 2007
- **A. DAVISON et al.** Mono SLAM: Real-time Single Camera SLAM. *Transactions on Pattern Analysis and Machine Intelligence (TPAMI,* 2007, 29
- **R. NEWCOMBE et al.** DTAM: Dense Tracking and Mapping in Real-Time. *ICCV,* 2011
- **A. WENDEL et al.** Dense Reconstruction On-The-Fly. *ECCV,* 2012

- **L. MATTHIES et al.** Incremental Estimation of Dense Depth Maps from Image Sequences. *CVPR,* 1998
- **A. CLIFFORD.** Multivariate Error Analysis. John Wiley & Sons, 1973
- **C. KERL.** Robust Odometry Estimation for RGB-D Cameras. *ICRA,* 2013
- **C. KERL et al.** Robust Odometry Estimation for RGB-D Cameras. *ICRA,* 2013